# EUROPÄISCHE PATENTSCHRIFT

(11) **EP 2 753 808 B1**
(45) Veröffentlichungstag und Bekanntmachung des Hinweises auf die Patenterteilung: **23.06.2021**
(21) Anmeldenummer: 12756661.0
(22) Anmeldetag: 05.09.2012
(51) Int. Cl.: F03D 9/17

(54) **ANLAGE ZUR SPEICHERUNG VON ENERGIE MITTELS DRUCKLUFT**
SYSTEM FOR STORING ENERGY BY MEANS OF COMPRESSED AIR
INSTALLATION POUR L'ACCUMULATION D'ÉNERGIE AU MOYEN D'AIR COMPRIMÉ

(30) Priorität: 05.09.2011 DE 102011112280
(43) Veröffentlichungstag der Anmeldung: 16.07.2014
(73) Patentinhaber: Fraunhofer-Gesellschaft zur Förderung der angewandten Forschung e.V., 80686 München (DE)
(72) Erfinder: DÄMGEN, Ulrich, 58636 Iserlohn (DE); MEIER-SCHEUVEN, Wolf, D., 33615 Bielefeld (DE)
(74) Vertreter: Heiland, Karsten
(86) Internationale Anmeldenummer: PCT/EP2012/003704
(87) Internationale Veröffentlichungsnummer: WO 2013/034284

(56) Entgegenhaltungen:
- JP-A- 9 317 495
- US-A- 4 281 256
- US-A1- 2010 307 156
- US-A1- 2011 094 212
- None

## Beschreibung

Die Erfindung betrifft eine Anlage zur Speicherung von Energie mittels Druckluft.

### Ausgangslage:

Fossile Energie soll (wg. CO2) durch erneuerbare Energie ersetzt werden. In der Stromversorgung gibt es Schwierigkeiten dadurch, dass das Angebot an erneuerbarer Energie, wie Wind - genutzt durch Windräder - und Sonne - genutzt durch Photovoltaik - stark schwankt und der Bedarf an elektrischer Energie nur dann weitestgehend mit erneuerbarer Energie gedeckt werden kann, wenn der dadurch erzeugte Strom speicherbar ist. Bekannte Verfahren dazu sind Akkumulatoren - zur Zeit deutlich zu teuer - Pumpspeicherkraftwerke - dafür braucht man größere Höhenunterschiede und die sind z. B. in der norddeutschen Tiefebene nicht vorhanden, außerdem gibt es oft Bürgerproteste wg. "Landschaftsverschandelung" - oder Druckluftspeicheranlagen (in der englisch-sprachigen Literatur oft CAES - "Compressed Air Energy Storage" genannt).

Diese können elektrische Energie im großen Maßstab speichern und verwenden dazu unterirdische Hohlräume, große Turbokompressoren und Turbinen. Vorhandene Anlagen arbeiten mit Erhitzung der Druckluft vor der Expansion mittels Erdgasfeuerung, um Eisbildung in der Turbine zu vermeiden, ein weiter fortgeschrittener Ansatz (meist adiabatisches Druckluftspeicherkraftwerk oder in engl. "adiabatic CAES" genannt) zielt darauf, die bei der Kompression frei werdende Kompressionswärme zu speichern und wieder in die Druckluft abzugeben, bevor diese in der Turbine expandiert wird. Auf diese Weise kann man sehr große Mengen an Energie für die Stromversorgung speichern, auch in flachen Gegenden, ohne dass die Landschaft verändert wird, ohne Zusatz fossiler Energie, mit gutem Speicherwirkungsgrad von etwa 70 % und zu recht niedrigen Kosten. Die Kosten zum Betrieb so einer Anlage sind fast nur Kapitalkosten. Und diese müssen für eine stärkere Nutzung erneuerbarer Energien noch sinken.

Beschrieben wird dieses Verfahren in den Unterlagen des Projektes "ADELE", geplant wurde dergleichen aber schon in der 80ern. (->CAES Studies Pacific Northwest Labs 1981.pdf, Conceptual Design and Engineering Studies of Adiabatic Compressed Air Energy Storage (CAES) with Thermal Energy Storage, M.J. Hobson et. al., November 1981, Pacific Northwest Laboratory - Batelle, PNL-4115). Bei ADELE hat man sich technisch hohe Ziele gesteckt, mit Drücken bis 100 bar und Temperaturen bis 600°C im Wärmespeicher.

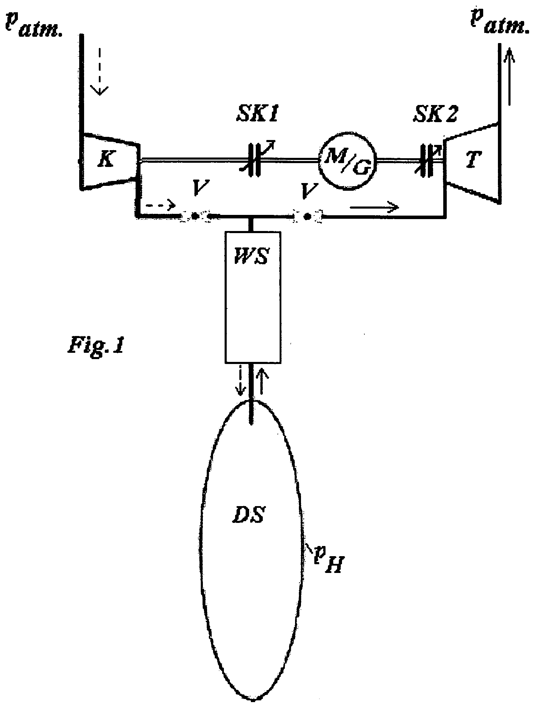

Fig. 1 beschreibt den schematischen Aufbau eines bekannten, adiabatischen Druckluftspeicherkraftwerks. Es gibt einen Druckluftspeicher DS in einem, meist unterirdischen, Volumen. Um ihn zu füllen, wird Umgebungsluft vom atmosphärischen Druck p-atm mit einem Kompressor K durch einen Wärmespeicher WS, in dem die Luft ihre Kompressionswärme an ein Speichermaterial abgibt, in das Volumen DS abgegeben. Im Wärmetauscher WS gibt es nur geringe Strömungs-Druckverluste. Die Richtung der Luft wird durch die gestrichelten Pfeile wiedergegeben. Eine Elektromaschine M/G, die als Motor und als Generator arbeiten kann, treibt dabei über eine hierzu geschlossene Schaltkupplung SK1 den Kompressor K an. Wenn die gespeicherte Energie abgerufen werden soll, strömt Luft aus dem Druckluftspeicher DS durch den Wärmespeicher WS, wo die gespeicherte Kompressionswärme im Wesentlichen wieder zurück übertragen wird, in eine Turbine T und schließlich in die Atmosphäre. Dies zeigen die durchgezogenen Pfeile. Die Turbine T ist über eine zweite, hierzu geschlossene Schaltkupplung SK2 mit der Elektromaschine M/G verbunden, welche nun als Generator arbeitet. Ventile V sorgen für die notwendigen Öffnungs- und Schließvorgänge.

Aus der US 4,281,256 ist eine Anlage zur Energiespeicherung mittels Druckluft bekannt, bei der eine modifizierte Verbrennungsmaschine als Hochdruckaggregat und auf einer Niederdruckseite ein Kompressor und eine Niederdruckturbine zusammenwirken. Kompressor und Niederdruckturbine werden wahlweise durch Kupplungen mit einem Motor/Generator gekoppelt.

Aus der US 2011/0094212 A1 ist eine Einrichtung zum Speichern von Druckluft bekannt, bei der zwei in Reihe geschaltete Maschinen jeweils Luft komprimieren und expandieren. Die Maschinen sitzen auf einer gemeinsamen Welle mit einem Motor/Generator.

### Die Aufgabe:

Damit dieses Verfahren der Druckluftspeicherung die Aufgabe der Vergleichmäßigung im Angebot erneuerbarer Energie noch deutlich besser lösen kann, muss es noch preiswerter werden. Wenn längere, z.B. tagelange Lücken im Angebot erneuerbarer Energie ausgeglichen werden sollen, muss es möglich sein, Speicherkapazität aufzubauen, die nicht täglich, sondern nur wenige Male im Jahr genutzt wird und sich schon dabei amortisiert. Das wird möglich durch bessere Nutzung eines Speichervolumens (zu Kosten von X Euro je m³ geometrischem Volumen) mit höherem Druck und größeren Druckschwankungen.

Die gleiche Aufgabe hat man, wenn man kleine Speicher aufbauen will, bei denen sich die viele Millionen Euro teure Anfangsinvestition in eine Bohrung in den Untergrund nicht rechnet und die deshalb auf kleine oberirdische Speicher angewiesen sind. Auch hier sind die Kapitalkosten der Anlage je gespeicherter kWh-Kapazität um so günstiger, je höher der Druck und je höher die Druckschwankungen im Speicher sind. Deshalb erscheint an den vorhandenen Projekten noch Folgendes verbesserungswürdig:
Wenn ein unterirdisches Speichervolumen mal mehr und mal weniger gefüllt ist, dann hat man dort schwankenden Druck (es gibt Überlegungen zur Druckkompensation mit Wasser, z.B. in DE102007042837A1 beschrieben und auch schon in vielen früheren Quellen, dies wurde aber wegen der mit dem Wasser verbundenen Schwierigkeiten nicht verwirklicht) und in den Turbomaschinen, die die Druckluft komprimieren oder expandieren, weichen die Strömungsverhältnisse unter Wirkungsgradeinbußen von dem Auslegungspunkt ab. Deshalb begrenzt man die Druckschwankungen auf geringe Werte, nutzt so die Speicherfähigkeit des Volumens nur teilweise, braucht damit mehr Volumen und hat höhere Kosten.

In der genannten DE102007042837A1 soll ein speziell für wechselnden Druck entworfener Hochdruckkompressor mit einer ebensolchen Turbine das Problem vermindern, ein anderer Ansatz wäre eine Drehzahlregelung der Turbomaschinen, um ähnlich dem Ansatz bei drehzahlregelbaren Pumpturbinen in Pumpspeicherkraftwerken die Geschwindigkeitsdreiecke annähernd kongruent und damit die Wirkungsgradeinbußen gering zu halten - hat dann aber den Nachteil der Kosten für aufwändige Leistungselektronik im Megawattbereich und kann den in üblichen Stromnetzen verlangten Bedarf an sogenanntem Kurzschlussstrom nur schwer bereit stellen.

Bei einer Lösung mit ausschließlich Turbomaschinen ist es auch schwer, hohe Drücke zur guten Ausnutzung des Speichervolumens zu verwirklichen, besonders bei weniger als 50 Mega-Watt Anlagenleistung.

Den Gedanken der "Pumpturbine", also der Nutzung der gleichen radialen Strömungsmaschine sowohl zum Pumpen wie zum Turbinenbetrieb (wie in neueren Pumpspeicherkraftwerken, z.B. Goldisthal, verwirklicht) findet man übrigens schon in JP000004347335A auf Druckluftspeicher angewendet. Damit ist eine zweite Verbesserungsmöglichkeit der bisher geplanten Konzepte genannt: Wenn man die gleiche Turbomaschine sowohl zur Kompression und Expansion nutzt, kann man die Kapitalkosten senken.

Weiter verbesserungswürdig ist die Startzeit eines herkömmlichen Druckluftspeicherkraftwerkes. Es dauert wegen der hohen Temperaturschwankungen längere Zeit vom Stillstand bis zum Lauf unter voller Last.

### Die vorgeschlagene Lösung:

Eine erfindungsgemäße Anlage zur Speicherung von Energie mittels Druckluft weist die Merkmale des Anspruchs 1 auf.

Die Möglichkeit, Energie, insbesondere erneuerbare Energie, im mittelgroßen Maßstab von etwa 1000 bis 100 000 kWh mit Druckluft zu speichern, soll dadurch verbessert werden, dass eine spezielle Kombination von Maschinen geschaffen wird, welche wechselweise zur Energie-Einspeicherung Umgebungsluft komprimiert und zur Ausspeicherung diese Druckluft rückexpandiert. Die Speicherkosten werden wesentlich durch die Herstellungskosten des Speichervolumens bestimmt. Gute Ausnutzung des Speichervolumens durch hohen Druck und hohe Druckschwankung verringert die Kosten. Das wird möglich durch eine Kombination aus einer Hochdruckmaschine (vorzugsweise Hochdruck-Verdrängermaschine) mit insbesondere regelbaren Steuerzeiten, in Reihe geschaltet mit einer Niederdruck-Turbomaschine, wobei beide bei der Einspeicherung als Kompressor und bei der Ausspeicherung als Expansionsmaschine arbeiten.

Vorteilhafterweise ist eine Niederdruck-Turbomaschine mit insbesondere mehreren Radialstufen mit einem Motor-Generator gekoppelt und arbeitet wechselweise als Kompressor und Expansionsmaschine. Bei dem Motor-Generator handelt es sich um eine Drehstrommaschine, vorzugsweise eine Synchronmaschine, welche mit dem landesweiten Stromnetz direkt gekoppelt sein kann. Als Verbindung zwischen Niederdruck-Turbomaschine und Motor-Generator ist eine drehrichtungsgeschaltete Kupplung (Überholkupplung) vorgesehen.

Die Niederdruck-Turbomaschine arbeitet als Kompressor und Expansionsmaschine und weist in der Spirale keinen Leitapparat auf. Dies ist auf Kosten guter Regelbarkeit preiswerter. Vorzugsweise wird deshalb die Anlage nicht in ihrer Leistung geregelt, sondern typischerweise komplett ein- und ausgeschaltet. Spiralen mit Leitapparaten in einer Niederdruck-Turbomaschine werden bei Turbo-Radialverdichtern auch als Nachleitschaufeln oder bei Turboladern als variable Turbogeometrie bezeichnet.

Die Speicherung der Druckluft erfolgt mit einem Maximaldruck p_{H} im Bereich von 100-300 bar. Der minimale Druck p_{H} beträgt weniger als 1/3 des maximalen Druckes.

Eine Hochdruckmaschine arbeitet bei dem stark wechselnden Druck im Druckluftspeicher und bei unabhängig davon etwa gleichbleibendem Mitteldruck p_{M}, welcher zwischen der Hochdruckmaschine und der Niederdruck-Turbomaschine vorliegt. Dieser Druck p_{M} hat bei Expansionsbetrieb etwa das 1,1-1,3 fache seines Wertes bei Kompressionsbetrieb. Kurzzeitig kann p_{M} auf Kosten des Wirkungsgrades für hohe Kurzzeitleistung (zu Regelzwecken) weiter erhöht werden.

Auch die Hochdruckmaschine ist mit einer Drehstrommaschine als Motor/Generator gekoppelt, welche an das landesweite Stromnetz angeschlossen und als Asynchronmaschine ausgebildet sein kann. Bei der Hochdruckmaschine kann es sich um eine Turbomaschine, Radial-Turbomaschine, eine Verdrängermaschine, einen Schraubenkompressor, eine Kolbenmaschine oder eine andere Kompressions-/Expansions-Maschine handeln. Bevorzugt ist eine Kolbenmaschine mit fester Drehzahl und veränderlicher Ventilsteuerung.

Vorteilhafterweise ist eine Umgehungsleitung um die Hochdruckmaschine herum vorgesehen, damit bei einem Schnellstart die Volumen im Niederdruckbereich schnell aus dem Druckluftspeicher aufgefüllt werden. Die Umgehungsleitung sollte geregelt werden, wegen der Gefahr des Überdrucks im Niederdruckbereich. Vorzugsweise ist ein Sicherheitsventil vorgesehen. Die Umgehungsleitung ist weiterhin hilfreich, wenn der Druckluftspeicher schon weitgehend geleert ist und die Niederdruck-Turbomaschine kurzzeitig erhöhten Druck p_{M} braucht.

Die Niederdruck-Turbomaschine und die Hochdruckmaschine haben abgeschlossene Wärmespeicher zur Aufnahme der Kompressionswärme. Die Niederdruck-Turbomaschine gibt bei Kompressionsbetrieb vorzugsweise mehrstufig die Kompressionswärme als Mitteltemperaturwärme mit maximal 250°, 300°, 350° oder 400°C an Wärmespeicher ab. Von dort wird die Kompressionswärme im Expansionsbetrieb mehrstufig zurückübertragen.

Die Wärmespeicher der Hochdruckmaschine haben vorzugsweise geringere Temperaturen, können teilweise von Luft durchströmt und teilweise an Schmierstoff- oder Kühlmittelkreisläufe angeschlossen sein.

Für die Druckluft wird als Druck p_{M} vorzugsweise ein Wert von 15-30% des maximalen Speicherdrucks PH1 angestrebt. Bei einem Speicherdruck von 200 bar beträgt somit der Druck p_{M} etwa 30-60 bar. Die Hochdruckmaschine, insbesondere Verdrängermaschine, kann damit gut einstufig arbeiten und hat bei etwa 50 bar p_{M} und maximalem Speicherdruck P_{H1} von 200 bar nur etwa 1/4 der Gesamtleistung der Anlage. Der größte Teil der Energieumwandlung findet in der Niederdruck-Turbomaschine bei gutem Wirkungsgrad, zu geringeren Kosten je kW und nahezu verschleißfrei statt. Möglich sind auch kleinere Anlagen bzw. mit geringeren Drücken, beispielsweise mit einem Mitteldruck p_{M} von 11 bar und einem maximalen Hochdruck P_{H1} von 50 bar.

Um hohe Drücke bei mittlerer Leistung zu verwirklichen, greift man für andere Anwendungen auf eine Kombination aus Turbomaschine für den Niederdruckbereich und Kolbenmaschine für den Hochdruckbereich zurück, wie z. B. in Turbo-Dieselmotoren. Auch bei Druckluftspeicherkraftwerken ist dieser Gedanke nicht völlig neu, vgl. US000004281256A (wo aber ein Verbrennungsmotor verwendet wird; und es wird nicht auf Anpassung an wechselnde Drücke eingegangen). Eine erfindungsgemäße Erkenntnis besteht darin, dass Verdrängermaschinen, wie z.B. eine Kolbenmaschine, nicht nur für hohe Drücke gut geeignet sind, sondern dass sie auch durch Anpassung der Steuerzeiten für das Ausschieben von Luft aus den Arbeitskammern in den Hochdruckbereich beim Verdichten bzw. beim Füllen der Arbeitskammern mit Luft aus dem Hochdruckbereich beim Expandieren gut an wechselnde Drücke im Luft-Speicher angepasst werden können.

So soll eine Turbomaschine zur wechselweisen Kompression und Expansion von Luft im Niederdruckbereich mit einer Verdrängermaschine zur wechselweisen Kompression und Expansion im Hochdruckbereich verbunden werden, wobei diese Verdrängermaschine insbesondere mit veränderlichen Steuerzeiten arbeitet.

Die Turbomaschine für den Niederdruckbereich ist vorzugsweise eine mehrstufige Radialmaschine mit integriertem Zahnradübersetzungs-Getriebe, die mehr als die Hälfte der Verdichtungsarbeit leistet, mit einer festen Drehzahl läuft und mit einer mit dem Stromnetz unmittelbar verbundenen Synchronmaschine (wechselweise als Motor und als Generator arbeitend) gekoppelt ist. Eine Wärmespeicherung findet mehrstufig statt, zum einen zweistufig an der Niederdruckturbomaschine, bei einem Temperaturniveau von maximal etwa 200-400°C zum anderen mit dem Kühl- oder dem Schmiermedium der Verdrängermaschine mit etwa 60-100° maximal und dann noch einmal im Hochdruckbereich zwischen Verdrängermaschine und Speicher mit einem Temperaturniveau von 150 bis 250°C maximal. Die Kolbenmaschine (als Verdrängermaschine für den Hochdruckbereich) ist ebenfalls mit einem Motorgenerator gekoppelt, vorzugsweise mit einer Drehstrommaschine, die ebenfalls mit dem Stromnetz direkt verbunden ist.

Eine Schwierigkeit bleibt noch: Wenn eine Radial-Strömungsmaschine wie z.B. ein Turbokompressor sowohl als Expansions-, wie auch als Kompressionsmaschine eingesetzt werden soll, dann hat sie unterschiedliche optimale Laufzahlen Sigma bei der Kompression und bei der Expansion (vgl. Cordier-Diagramm). Bei gleichem Druck p_{M} zwischen der Turbo- und der Verdrängermaschine müsste die Drehzahl der Turbomaschine bei Expansionsbetrieb etwas geringer sein als bei Pumpbetrieb. Für einen einfachen, preiswerten Aufbau der Maschinenanlage ist aber direkte Koppelung mit dem Stromnetz und damit eine konstante Drehzahl (wie bei Synchronmaschinen, oder zumindest näherungsweise, +/-5 % konstante Drehzahl wie bei Asynchronmaschinen) vorteilhaft. Die vorgeschlagene Lösung verwendet einen Druck p_{M}, der bei Kompressions- und Expansionsbetrieb etwas unterschiedlich ist, bei Expansionsbetrieb kann er etwa 15 bis 25% höher als bei Kompressionsbetrieb gehalten werden.

Falls der Bedarf besteht, kurzzeitig auf Kosten des Wirkungsgrades, aber mit dem Vorteil geringer Kapitalkosten (je kW-Maximal-Abgabeleistung) die ins Stromnetz abgegebene Leistung der Gesamtanlage zu steigern, kann der Druck p_{M} noch weiter angehoben werden, bis hin zur direkten Verbindung des Speichervolumens mit der Turbomaschine (p_{H} = p_{M} in dem Zeitpunkt, wenn der Speicherdruck p_{H} schon nahe dem Minimalwert und somit der Druckluftspeicher fast entleert ist; eine solche Umwegleitung um die Verdrängermaschine herum mit ggf. einem Drosselventil könnte auch zur kurzzeitigen Leistungssteigerung oder zur Anfahrbeschleunigung dienen).

Der Druckluft wird bei der Expansion bei mehreren Druckstufen die gespeicherte Kompressionswärme zugeführt. Bei Anlagen zur Langzeitspeicherung, bei denen große Wärmespeicher, ausreichend für die gesamte gespeicherte Druckluftmenge, nur selten im Jahr genutzt würden und bei denen diese deshalb zur Kosteneinsparung kleiner ausgelegt würden, kann eine zusätzliche Wärmezufuhr durch Hilfsfeuerung erfolgen. Bei einer Hilfsfeuerung liegt auch der Gedanke nahe, Abwärme aus der expandierten Druckluft über einen Wärmetauscher in noch nicht, oder nicht vollständig expandierte Druckluft zu übertragen.

Als Verdrängermaschine kann eine Kolbenmaschine verwendet werden, deren Steuerventile (oder Steuerschieber) unterschiedliche Füll- bzw. Ausschubzeiten auf der Hochdruckseite ermöglichen. Bei höheren zu überwindenden Druckverhältnissen (z.B. 10 zu 200 barÜ) kann es auch eine zweistufige Maschine sein, bei der gegebenenfalls nur die für den höheren Druck vorgesehenen Arbeitskammern mit solcherart verstellbaren Steuerventilen ausgerüstet sind. Eine Verstellbarkeit aller Steuerventile ist jedoch ebenfalls denkbar.

Insbesondere wäre es bei einer weitgehenden Verstellbarkeit sowohl der Steuerventile zum höheren wie der zum niedrigen Druckniveau möglich, die Kolbenmaschine vom Expansions- zum Kompressionsbetrieb und umgekehrt bei gleichbleibender Drehzahl umzusteuern, also ohne die Drehrichtung zu ändern, was besonders schnelle Lastwechsel ermöglicht. Solche schnellen Laständerungen werden auch durch das geringe Temperaturniveau und demzufolge geringe Wärmespannungen erleichtert.

Im Zuge solcher Überlegungen sei erwähnt, dass dazu auch eine Verbindung der Turbomaschine mit dem Motor-Generator möglich wäre, die mit einer Schaltkupplung und/oder einem Wendegetriebe und/oder einer richtungsgeschalteten Kupplung, meist Überholkupplung oder Freilauf genannt, arbeitet. So kann beispielsweise bei ununterbrochen in einer Richtung und mit einer Drehzahl drehender Elektromaschine (bei stillstehender Turbomaschine, Nutzung im Leerlauf als Phasenschieber möglich, Stabilisierung des Netzes durch zusätzliche rotierende Masse) die Turbomaschine sehr schnell im Expansionsbetrieb gestartet und durch die Überholkupplung mit ihr zur Leistungsabgabe verbunden werden.

Bei unter Last schaltbarer Kupplung wäre die gleiche Wirkung beim Start als Kompressor möglich. Mit Wendegetriebe und unter Last schaltbarer Kupplung wäre auch ein Umschalten der Turbomaschine von Expansions- in Kompressionsbetrieb mit Umkehr der Drehrichtung der Turbomaschine bei ununterbrochen in einer Richtung drehender Elektromaschine möglich.

Erwähnt werden soll auch die Möglichkeit, als Verdrängermaschine eine Schraubenmaschine mit Steuerschieber, eine Flügelzellenmaschine mit verstellbarer Achsposition, eine Vielkolbenmaschine analog den Axialkolbenmaschinen mit verstellbarer Schrägachse aus der Hydraulik, eine Schraubspindelmaschine analog denen aus der Vakuumtechnik (in diesem Fall mit von der Saug- zur Druckseite abnehmender Steigung und zuschaltbaren Schlitzen zur Verbindung der Arbeitskammer mit dem höheren Druckniveau p_{H} bei höherem Arbeitsraum-Volumen) oder eine Anordnung wie "BOP-B" von Prof. Rufer und Herrn Cyphelli zu verwenden. Es würde zu weit führen, hier alle Verdrängermaschinen mit verstellbarer Füllung im Expansionsbetrieb aufzuzählen.

Denkbar ist auch die Verwendung einer drehzahlregelbaren Verdrängermaschine in Kombination mit einer nicht drehzahlregelbaren Turbomaschine, oder die Verwendung einer Hubkolbenmaschine, deren Kolben nicht über Kurbelwelle und Pleuel, sondern mit einem elektrischen oder hydraulischen Linearantrieb - verbunden mit der Möglichkeit eines variablen Hubes und/oder variabler Hubfrequenz, angetrieben wird. Ebenso die Verwendung mehrerer Verdrängermaschinen für den Hochdruckbereich, zueinander parallel geschaltet, in Reihe geschaltet mit einer Turbomaschine für den Niederdruckbereich (wobei die Anzahl der jeweils laufenden Verdrängermaschinen an den gewünschten Druckluftmassenstrom angepasst werden kann).

Auch auf diesem Weg ist es möglich, den Druck p_{M} trotz wechselnden Drucks im Speicher p_{H} etwa gleich zu halten. In Fachbegriffen ausgedrückt, wird bei der Expansion das Schluckvolumen je Zeiteinheit der einer Niederdruckturbomaschine vorgeschalteten Verdrängermaschine(-n) so geregelt, dass der Druckluftmassenstrom bei veränderlichem Eintrittsdruck p_{H} gleich bleibt. Der Fachbegriff Schluckvolumen bezeichnet das Volumen der Summe der Arbeitsräume der Verdrängermaschine(-n) bei Abschluss des Füllvorgangs, hier bei der Expansion beim Schließen des Arbeitsraumes gegenüber dem Druck p_{H}. Bei einer solchen Regelung der Anzahl der laufenden Verdrängermaschinen, ebenso bei einer Drehzahlregelung einer Verdrängermaschine mit festen Steuerzeiten oder einer Zylinderabschaltung in einer Verdrängermaschine ist der Wirkungsgrad schlechter als bei einer Veränderung der Steuerzeiten, es könnte sich aber ein Kostenvorteil ergeben.

Ebenso denkbar ist die Anordnung von mehreren Radial-Turbomaschinen, deren Fördermenge üblicherweise nur in geringem Maße geregelt werden kann, parallel zueinander, so dass wechselnde Leistungsanforderungen durch das Ab- und Zuschalten von einzelnen Turbomaschinen beantwortet werden. Diese Turbokompressoren würden auf eine gemeinsame Mitteldruck-Luftleitung arbeiten, an welche mehrere Hochdruck-Verdrängermaschinen angeschlossen sind.

Auch ist es möglich, zur Verwirklichung einer Expansionsleistung, die kleiner oder deutlich größer als die Kompressorleistung sein soll, eine Energiespeicheranlage zu entwerfen, bei welcher neben Maschinen zur wechselweisen Kompression und Expansion auch Maschinen parallel geschaltet sind, die nur als Kompressor oder nur als Expansionsmaschine arbeiten können.

Die Hilfsfeuerung in einer (Kolben-) Verdrängermaschine bei nicht ausreichender Kapazität des Wärmespeichers kann auch derart verwirklicht werden, dass die Verbrennung in der Arbeitskammer stattfindet, ähnlich wie in einem Dieselmotor in dem Zeitraum zwischen Einspritzen des Brennstoffes (Öl oder Hochdruckerdgas) und Ende des Expansionshubes. Der Unterschied zu dem in US000004281256A beschriebenen Verfahren besteht zum einen darin, dass hier veränderlicher Druck im Luftspeicher und veränderliche Ventilsteuerzeiten vorliegen, zum anderen in der Verwendung der gleichen Niederdruckturbomaschine für Kompression und Expansion.

Erwähnt werden soll auch die Möglichkeit, dass eine Anordnung aus Niederdruckturbomaschinen und Hochdruck-Kolbenmaschine zum einen mit einem Druckluftspeicher zusammenarbeitet (mit oder ohne innere Feuerung) als Energiespeicheranlage, zum anderen bei längeren Pausen der erneuerbaren Energie (ohne Einbeziehung des dann geleerten Druckluftspeichers) als Turbodieselmotor. Dazu wären 2 Turbomaschinen notwendig, die bei Speicherbetrieb beide wechselweise als Kompressor und Turbine arbeiten, bei Betrieb als Turbodieselmotor müsste eine Turbomaschine als Turboverdichter arbeiten, die andere als Turbine. Hierbei arbeiten die zwei Turbomaschinen wie der Abgasturbolader und die Hochdruckkolbenmaschine wie die Verbrennungsmaschine eines Turbodieselmotors.

Auf möglicherweise notwendige Siebe, Filter, Verschmutzungsauffang-Magnete für in den Rohren entstehenden Rost und Zunder und Ölabscheider in den Rohren für die Druckluft wird im Folgenden nicht eingegangen, ebenso nicht auf die notwendigen Kondenswasserabscheider am kalten Ende von Wärmespeichern.

Es sei angemerkt, dass die Anordnung aus einer Hochdruckverdrängermaschine und einer Niederdruckturbomaschine zur wechselweisen Kompression und Expansion auch mit einer drehzahlregelbaren Antriebswelle, wie sie in einer Windturbine, z.B. des weitverbreiteten Typs Fuhrländer F1500 vorliegt, gut gekuppelt werden könnte.

Es gälte der Zusammenhang: Niedrige Windgeschwindigkeit - niedrige Windleistung - niedrige Drehzahl der Windturbine - niedrige Drehzahl der mit der Antriebswelle der Windturbine über ein Getriebe verbundenen Niederdruckturbomaschine - geringer Druck p_{M} - die Hochdruckverdrängermaschine kann trotzdem gegen einen hohen Speicherdruck Druckluft einspeichern - und -
Hohe Windgeschwindigkeit - hohe Windleistung - hohe Drehzahl der Windturbine - hohe Drehzahl der mit der Antriebswelle der Windturbine über ein Getriebe verbundenen Niederdruckturbomaschine - hoher Druck p_{M} - die Hochdruckverdrängermaschine kann durch hohen Druck p_{M} viel Druckluft einspeichern - dabei sind steuerbare Ventilzeiten bei der Kompression entscheidend für guten Wirkungsgrad bei schwankenden Drücken p_{H} und p_{M}. So könnte Windenergie als Druckluft in Speicher befördert werden.

Bei der Ausspeicherung könnte die selbe Kombination aus Niederdruckturbokompressor ebenfalls genutzt werden: Die Hochdruckverdrängermaschine arbeitet als Expansionsmaschine, die Niederdruckturbomaschine arbeitet mit entgegengesetzter Drehrichtung als Expansionsmaschine, ein in solche Windturbinen üblicherweise eingebauter Generator leitet die Energie in das Stromnetz; beispielsweise über Kupplung und Wendegetriebe mit den Expansionsmaschinen verbunden, vgl. auch DE102008057776A1.

Weitere Merkmale der Erfindung ergeben sich aus der Beschreibung im übrigen und aus den Ansprüchen.

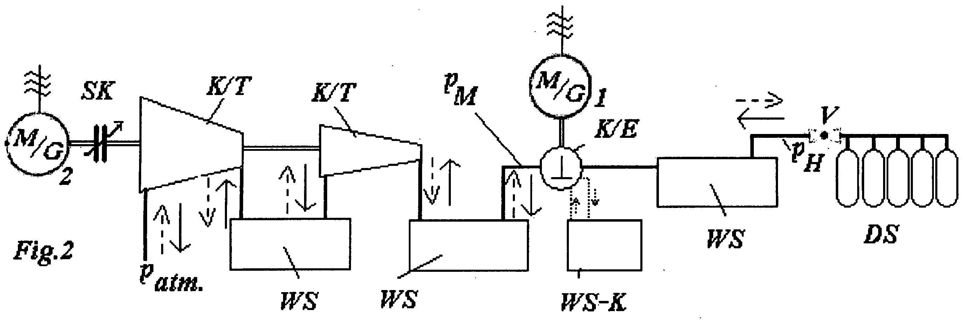

**Fig. 2** zeigt schematisch den Aufbau einer vorteilhaften Druckluft-Energiespeicheranlage gemäß der Erfindung.

Im Druckluftspeicher DS, durch mehrere parallel geschaltete Behälter gebildet, herrscht ein erhöhter Druck p_{H}. Neben Stahldruckbehältern kommen hier als Druckspeicher für den Großbereich unterirdische Salzkavernen oder Porengasspeicher in Frage, im Kleinbereich auch Druckgasflaschen. Um den Druckluftspeicher DS zu füllen, wird Umgebungsluft von atmosphärischem Druck pₐₜₘ 2-stufig durch eine Niederdruckturbomaschine radialer Bauart, K/T, die als Kompressor und als Turbine arbeiten kann, auf einen mittleren Druck p_{M} von 10 bar gebracht.

Dieser Druck wird unabhängig vom Druck p_{H} im Speicher nahezu gleich gehalten. Dabei wird die Kompressionswärme 2-stufig in Wärmespeichern WS eingelagert. Eine Verdrängermaschine K/E, die als Kompressor und als Expansionsmaschine arbeiten kann, komprimiert die Luft dann auf den Speicherdruck p_{H}, der im Normalbetrieb von einem Mindestwert p_{H2} 20 bar auf einen Höchstwert p_{H1} von 100 bar gebracht wird. Vor dem Eintritt in den Druckluftspeicher DS wird noch einmal Kompressionswärme in einen Wärmespeicher WS abgegeben. Der Weg der Luft wird durch gestrichelte Pfeile angegeben.

Die Schaltkupplung SK ist eine richtungsgeschaltete Kupplung, auch Überholkupplung genannt, die je nach Drehrichtung des Wellendrehmomentes geschlossen oder offen ist. Beim Verdichten ist sie geschlossen, ebenso wenn die Niederdruckturbomaschine bei umgekehrter Drehrichtung als Turbine arbeitet. Als Verdrängermaschine ist eine herkömmliche Kolbenmaschine mit Kurbeltrieb vorgesehen, als damit verbundene Elektromaschine M/G₁ ist vorsichtshalber eine Drehstromasynchronmaschine vorgesehen, um Drehungleichmäßigkeiten nicht starr auf das Stromnetz zu übertragen.

In der Kombination Synchronmaschine-an-der-Turbomaschine + Asynchronmaschine versorgt die Synchronmaschine die Asynchronmaschine mit Blindleistung. Beide Maschinen M/G sind mit dem landesweiten Drehstromnetz ohne zwischengeschaltete Leistungselektronik verbunden. Die Drehzahl bleibt damit bis auf Schlupfeffekte gleich. Mit dieser Anordnung sind Schwarzstartfähigkeit und hoher Kurzschlussstrom preisgünstig erzielbar.

Die Lufttemperatur ist im Kompressionsbetrieb bei Eintritt in die Wärmespeicher im Bereich von 200 - 300°C. Dadurch sind die Anforderungen an die Wärmespeicher einfacher zu erfüllen und die Wärmespannungen in den Maschinen bleiben gering. Die Verdrängermaschine K/E ist mit einem Wärmespeicher für Kühl- oder Schmierstoff (gepunktete Linien für diesbezügliche Leitungen) WS-K verbunden, der bei der Kompression auch mit Kompressionswärme gefüllt wird, aber auf geringerem Temperaturniveau von bis zu 100°.

Nach dem Füllen des Speichers stehen die Maschinen still. Zur Vorbereitung eines schnellen Starts kann die mit der Niederdruckturbomaschine verbundene Elektromaschine M/G₂, eine Drehstromsynchronmaschine, in umgekehrter Richtung in Betrieb gesetzt und mit dem Netz synchronisiert werden. Die Überholkupplung öffnet dabei selbsttätig und wird sich selbsttätig schließen, sobald die Niederdruckturbomaschine bei Start Synchrondrehzahl erreicht.

Bei der Expansion strömt die Druckluft in entgegengesetzter Richtung, wie durch die durchgezogenen Pfeile gekennzeichnet. Die Druckluft nimmt aus den Wärmespeichern WS gespeicherte Kompressionswärme auf. Der Druck p_{M} wird unabhängig vom Druck p_{H} nahezu gleich bei etwa 12 bar gehalten. Dadurch ergibt sich in der Turbomaschine K/T ein etwas höherer Wert für die Stufenlaufzahl Sigma als bei der Kompression, was laut Cordier-Diagramm förderlich für den Wirkungsgrad ist.

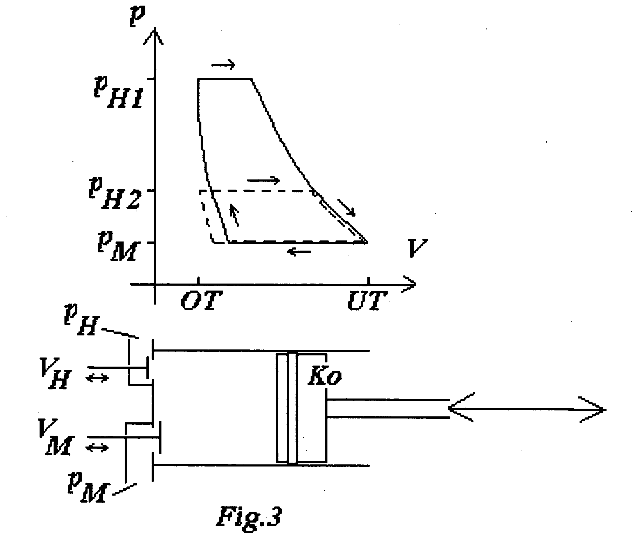

Ein etwa gleicher Wert für p_{M} unabhängig von p_{H} wird durch unterschiedliche Füllung des Arbeitsraumes in der Verdrängermaschine erreicht, wie in **Fig.3** gezeigt. Dort ist ein Kolben Ko gezeigt, der in einem Zylinder zwischen oberem Totopunkt OT und unterem Totpunkt UT hin- und hergeht. Die Verbindungen des Arbeitsraumes zum Speicherdruck p_{H} und zum Mitteldruck p_{M} werden durch Ventile VH und VM bei jeder Kurbelumdrehung geöffnet und geschlossen.

Im oberen Teil von **Fig. 3** ist ein schematisches p-V-Diagramm für den Expansionsvorgang gezeichnet, einmal für hohen Speicherdruck p_{H1}, durchgezogene Linie, einmal für kleinen Speicherdruck p_{H2}, gestrichelte Linie. Bei geringem Speicherdruck schließt das Ventil VH erst bei einem größeren Volumen des Arbeitsraumes im Zylinder. In diesem Beispiel hat auch das Ventil VM unterschiedliche Steuerzeiten. Bei der Kompression wird das p-V-Diagramm in umgekehrter Richtung durchlaufen, auch da ist eine Anpassung der Ventilzeiten an den Druck p_{H} für besseren Wirkungsgrad hilfreich.

Wenn das Stromnetz kurzzeitig zu Regelzwecken mehr Leistung benötigt, wird die Füllung der Verdrängermaschine weiter gesteigert, der Durchsatz an Druckluft wird größer, der Druck p_{M} kann auf 18 bar steigen.

Eine solche Druckluft- Energiespeicheranlage, zusammengebaut aus bekannten und preiswerten Maschinentypen und deshalb einfach zu entwickeln, hat aufgrund der begrenzten Regelbarkeit einer üblichen Radial-Turbomaschine ohne Leitschaufeln in der Spirale nur einen kleinen Regelbereich, im Kompressorbetrieb sowieso und im Turbinenbetrieb wäre bei Teillast der Wirkungsgrad ungünstig.

Allerdings würde bei einer Energiespeicher-Anlagengröße von 5 Megawatt ein Windpark von 100 MW Nennleistung mit etwa 5 Stück solcher Druckluft-Energiespeicheranlagen kombiniert. Die Leistungsschwankung des Windparks von 100 MW Nennleistung kann dann gut durch stufenweises Zu- und Abschalten solcher Speicheranlagen vergleichmäßigt werden.

## Patentansprüche

1. Anlage zur Speicherung von Energie mittels Druckluft, bei welcher:
- ein Speichervolumen Luft unter erhöhtem Druck p_{H} aufnimmt,
- zur Energie-Speicherung Umgebungsluft komprimiert und in das Speichervolumen gebracht wird,
- zur Ausspeicherung Druckluft aus dem Speichervolumen entnommen und unter Arbeitsabgabe in die Umgebung entlassen wird,
- eine Niederdruckturbomaschine zur wechselweisen Kompression und Expansion - oder mehrere solcher Maschinen - Umgebungsluft auf einen mittleren Druck p_{M} komprimieren bzw. von dort expandieren,
- eine Hochdruckmaschine zur wechselweisen Kompression und Expansion Luft von dem mittleren Druck p_{M} auf den Speicherdruck p_{H} komprimiert bzw. von dort expandiert, oder mehrere solcher Maschinen, strömungstechnisch parallel geschaltet, diese Aufgabe erfüllen,
- diese mindestens eine Niederdruckturbomaschine und mindestens eine Hochdruckmaschine strömungstechnisch in Reihe geschaltet sind und mit je einem oder mit einem gemeinsamen Generator/Motor - also einer Elektromaschine, die wahlweise als Motor und Generator arbeitet - mechanisch gekuppelt sind,
**dadurch gekennzeichnet, dass** der mittlere Druck p_{M} unabhängig vom Speicherdruck p_{H} bei Expansion und Kompression durch die Steuerung der mindestens einen Hochdruckmaschine jeweils gleich gehalten werden kann.

2. Anlage nach Anspruch 1, wobei die wechselweise Kompression und Expansion von Luft von dem mittleren Druck p_{M} auf den Speicherdruck p_{H} durch eine Verdrängermaschine, oder mehrere parallel geschaltete Verdrängermaschinen durchgeführt wird, wobei zumindest beim Expansionsbetrieb unterschiedliche Schluckvolumen je Zeiteinheit eingestellt werden können.

3. Anlage nach Anspruch 1 oder 2, wobei eine Verdrängermaschine zur wechselweisen Kompression und Expansion von Luft von dem mittleren Druck p_{M} auf den Speicherdruck p_{H} dafür gebaut ist, auf ihrer Hochdruckseite bei Expansionsbetrieb die Verbindung Speicherdruck-Arbeitsraum bei unterschiedlichem Arbeitsraumvolumen zu schließen bzw. bei Kompressionsbetrieb bei unterschiedlichem Arbeitsraumvolumen die Verbindung Arbeitsraum-Speicherdruck zu öffnen und damit unterschiedliche Arbeitsraum-Füllungen beim Expansionsbetrieb bzw. unterschiedliche Ausschubzeitpunkte beim Kompressionsbetrieb zu ermöglichen.

4. Anlage nach Anspruch 1, 2 oder 3, wobei der minimale Speicherdruck bei bestimmungsgemäßem Speicherbetrieb weniger als ein Drittel des maximalen Speicherdruckes beträgt.

5. Anlage nach einem der vorhergehenden Ansprüche, wobei die Niederdruck-Turbomaschine sowohl bei Expansion wie Kompression eine feste Drehzahl oder eine nahezu (+/-5%) feste Drehzahl hat, die durch die Frequenz im landesweiten Stromnetz bestimmt ist.

6. Anlage nach einem der vorhergehenden Ansprüche, mit mehrstufiger Wärmespeicherung und Maximaltemperaturen zwischen 200° und 400°C, wobei der Wärmetausch dazu vorzugsweise bei Zwischenstufen der Niederdruckturbomaschine, zwischen Niederdruckturbomaschine und Hochdruckmaschine, in einer als Hochdruckmaschine eingesetzten Verdrängermaschine, im Schmiermittelkreislauf einer Verdrängermaschine und/oder zwischen Hochdruckmaschine und Speichervolumen stattfinden kann.

7. Anlage nach einem der vorhergehenden Ansprüche, bei welcher im Normalbetrieb der mittlere Druck p_{M} bei Expansionsbetrieb zwischen dem 1,05-fachen bis 1,3-fachen des Wertes von p_{M} bei Kompressionsbetrieb liegt,
wobei vorzugsweise in einer Fortbildung durch kurzzeitig, mittels erhöhten Schluckvolumens je Zeiteinheit der Verdrängermaschine, erhöhten Druck p_{M} die abgegebene Leistung der Anlage - für beispielsweise kurzzeitige Regelzwecke - um mehr als 25% erhöht werden kann.

8. Anlage nach einem der vorhergehenden Ansprüche, wobei in der Verdrängermaschine im Betrieb ein mechanisches, Leistung übertragendes Glied wie z.B. eine Kolbenstange durch den Aufbau des Antriebs bedingt, unabhängig vom Speicherdruck, mit immer nahezu (+/-5 %) gleicher Frequenz bewegt wird, vorzugsweise mit einer Frequenz, die mit der Frequenz im landesweiten Stromnetz verknüpft ist.

9. Anlage nach einem der vorhergehenden Ansprüche, bei der mindestens eine Kupplung zwischen einem Motor-Generator und einer damit gekuppelten Maschine zur wechselweisen Kompression und Expansion eine richtungsgeschaltete Kupplung ist.

10. Anlage nach einem der vorhergehenden Ansprüche, bei der beim Expansionsvorgang der Druckluft in der Verdrängermaschine, vorzugsweise im Arbeitszyklus nach dem Lufteintritt in den Arbeitsraum, dort eine Zufeüerung erfolgt, um die Temperatur zu erhöhen, vorzugsweise ausgehend von einer durch Wärme aus einem Kompressionswärmespeicher schon erhöhten Temperatur.

## Claims

1. Plant for storing energy by means of compressed air, in which:
- a storage volume accommodates air at elevated pressure p_{H},
- for energy storage, ambient air is compressed and introduced into the storage volume,
- for removal from storage, compressed air is extracted from the storage volume and discharged into the environment, performing work,
- a low-pressure turbomachine for alternate compression and expansion - or multiple such machines - respectively compress ambient air to a medium pressure p_{M} and expand said ambient air from said pressure,
- a high-pressure machine for alternate compression and expansion respectively compresses air from the medium pressure p_{M} to the store pressure p_{H} and expands said air from the latter pressure, or multiple such machines connected in parallel in terms of flow perform said task,
- said at least one low-pressure turbomachine and at least one high-pressure machine are connected in series in terms of flow and are mechanically coupled to in each case one, or to one common, generator/motor - that is to say an electric machine that operates selectively as a motor and generator,
**characterized in that** the medium pressure p_{M} can be kept equal in each case independently of the store pressure p_{H} during expansion and compression by the control of the at least one high-pressure machine.

2. Plant according to Claim 1, wherein the alternate compression and expansion of air from the medium pressure p_{M} to the store pressure p_{H} is performed by means of a positive-displacement machine or multiple positive-displacement machines connected in parallel, wherein, at least during expansion operation, different volumetric displacements per unit of time can be set.

3. Plant according to Claim 1 or 2, wherein a positive-displacement machine for alternate compression and expansion of air from the medium pressure p_{M} to the store pressure p_{H} is constructed such that, on its high-pressure side, during expansion operation it closes the connection from store pressure to working chamber at varying working chamber volume, and during compression operation it opens the connection from working chamber to store pressure at varying working chamber volume, and thus permits different working chamber charges during expansion operation and different discharge timing during compression operation.

4. Plant according to Claim 1, 2 or 3, wherein the minimum store pressure in normal storage operation amounts to less than one third of the maximum store pressure.

5. Plant according to one of the preceding claims, wherein the low-pressure turbomachine has a fixed rotational speed or a virtually (+/-5%) fixed rotational speed both during expansion and during compression, said rotational speed being defined by the frequency in the country-wide electrical grid.

6. Plant according to one of the preceding claims, with multi-stage heat storage and maximum temperatures of between 200° and 400°C, wherein the exchange of heat for this purpose can preferably take place in intermediate stages of the low-pressure turbomachine, between low-pressure turbomachine and high-pressure machine, in a positive-displacement machine used as high-pressure machine, in the lubricant circuit of a positive-displacement machine, and/or between high-pressure machine and storage volume.

7. Plant according to one of the preceding claims, in which, during normal operation, the medium pressure p_{M} during expansion operation amounts to between 1.05 times and 1.3 times the value of p_{M} during compression operation,
wherein preferably, in one refinement, by means of a pressure p_{M} briefly elevated by means of increased volumetric displacement per unit of time of the positive-displacement machine, the output power of the plant can be increased by more than 25% - for example for brief regulating purposes.

8. Plant according to one of the preceding claims, wherein, in the positive-displacement machine, during operation, a mechanical, power-transmitting element such as for example a piston rod is moved, owing to the construction of the drive and independently of the store pressure, with always approximately (+/-5%) the same frequency, preferably with a frequency that is linked to the frequency in the country-wide electrical grid.

9. Plant according to one of the preceding claims, in which at least one coupling between a motor-generator and a machine, coupled thereto, for alternate compression and expansion is a directional coupling.

10. Plant according to one of the preceding claims, in which, during the expansion process of the compressed air in the positive-displacement machine, preferably in the working cycle after the inflow of air into the working chamber, combustion is performed there in order to increase the temperature, preferably proceeding from a temperature already elevated by heat from a compression heat store.

## Revendications

1. Installation pour l'accumulation d'énergie au moyen d'air comprimé, dans laquelle :
- un volume d'accumulation reçoit de l'air sous haute pression p_{H},
- pour l'accumulation d'énergie, de l'air ambiant est comprimé et chargé dans le volume d'accumulation,
- pour le retrait, de l'air comprimé est prélevé sur le volume d'accumulation et évacué dans l'environnement en fournissant du travail,
- une turbomachine basse pression pour la compression et la détente alternées, ou plusieurs de ces machines, comprime(nt) l'air ambiant à une pression moyenne p_{M} ou le détend(ent) à partir de cette pression,
- une machine haute pression pour la compression et la détente alternées comprime l'air de la pression moyenne p_{M} à la pression d'accumulation p_{H} ou le détend à partir de cette pression, ou plusieurs de ces machines, connectées fluidiquement en parallèle, effectuent cette opération,
- ladite au moins une turbomachine basse pression et ladite au moins une machine haute pression sont connectées fluidiquement en série et sont accouplées mécaniquement à un générateur/moteur respectivement ou à un générateur/moteur commun, donc à une machine électrique qui fonctionne au choix comme un moteur ou comme un générateur,
**caractérisée en ce que** la pression moyenne p_{M} peut être maintenue respectivement constante indépendamment de la pression d'accumulation p_{H} lors de la détente et de la compression par la commande de ladite au moins une machine haute pression.

2. Installation selon la revendication 1, dans laquelle la compression et la détente alternées de l'air de la pression moyenne p_{M} à la pression d'accumulation p_{H} sont effectuées par une machine volumétrique ou par plusieurs machines volumétriques connectées en parallèle, dans laquelle différents volumes d'absorption par unité de temps peuvent être réglés au moins en mode expansion.

3. Installation selon la revendication 1 ou 2, dans laquelle une machine volumétrique pour la compression et la détente alternées de l'air de la pression moyenne p_{M} à la pression d'accumulation p_{H} est conçue pour fermer sur son côté haute pression en mode expansion la connexion entre la pression d'accumulation et l'espace de travail pour différents volumes d'espace de travail, ou pour ouvrir en mode compression pour différents volumes d'espace de travail la connexion entre l'espace de travail et la pression d'accumulation, et donc pour permettre différents remplissages d'espace de travail en mode expansion ou différents temps de sortie en mode compression.

4. Installation selon la revendication 1, 2 ou 3, dans laquelle la pression d'accumulation minimale, en cas de fonctionnement en accumulation conforme, est inférieure à un tiers de la pression d'accumulation maximale.

5. Installation selon l'une quelconque des revendications précédentes, dans laquelle la turbomachine basse pression présente un régime fixe ou un régime presque fixe (±5 %), à la fois lors de la détente et lors de la compression, qui est déterminé par la fréquence du réseau électrique du pays.

6. Installation selon l'une quelconque des revendications précédentes, dotée d'une accumulation thermique à plusieurs niveaux et de températures maximales comprises entre 200° et 400 °C, dans laquelle l'échange thermique peut alors de préférence avoir lieu pour des niveaux intermédiaires de la turbomachine basse pression, entre la turbomachine basse pression et la machine haute pression, dans une machine volumétrique mise en œuvre comme une machine haute pression, dans le circuit de lubrification d'une machine volumétrique et/ou entre la machine haute pression et le volume d'accumulation.

7. Installation selon l'une quelconque des revendications précédentes, dans laquelle, en cas de fonctionnement normal, la pression moyenne p_{M} en mode expansion est située entre 1,05 et 1,3 fois la valeur de p_{M} en mode compression,
dans laquelle, de préférence dans un développement, une pression p_{M} temporairement augmentée au moyen d'un volume d'absorption par unité de temps augmenté de la machine volumétrique permet d'augmenter la puissance débitée de l'installation de plus de 25 %, par exemple à des fins de régulation temporaires.

8. Installation selon l'une quelconque des revendications précédentes, dans laquelle, dans la machine volumétrique en cours de fonctionnement, un élément mécanique transmettant de la puissance, comme par exemple une tige de piston, dû à la structure de l'entraînement, indépendamment de la pression d'accumulation, est déplacé à une fréquence presque toujours identique (±5 %), de préférence à une fréquence qui est liée à la fréquence du réseau électrique du pays.

9. Installation selon l'une quelconque des revendications précédentes, dans laquelle au moins un accouplement entre un moteur-générateur et une machine accouplée à celui-ci pour la compression et la détente alternées est un accouplement directionnel.

10. Installation selon l'une quelconque des revendications précédentes, dans laquelle, pendant l'opération d'expansion de l'air comprimé dans la machine volumétrique, de préférence dans le cycle de travail après l'entrée d'air dans l'espace de travail, une combustion supplémentaire a lieu dans cet espace pour augmenter la température, de préférence en partant d'une température déjà augmentée par la chaleur provenant d'un accumulateur de chaleur de compression.
